# EUROPEAN PATENT APPLICATION

(11) **EP 4 002 154 A1**
(43) Date of publication of application: **25.05.2022**
(21) Application number: 19941860.9
(22) Date of filing: 22.08.2019
(51) Int. Cl.: G06F 16/30

(54) **METHOD AND APPARATUS FOR LABELING DATA POINT**

(71) Applicant: Siemens Ltd., China, Chaoyang District Beijing 100102 (CN)
(72) Inventor: LOH, Chang Wei, Suzhou, Jiangsu 215000 (CN); HUI, Hao Tian, Suzhou, Jiangsu 215200 (CN); TANG, Qi, Changshu, Jiangsu 215500 (CN); LIU, Xiao Nan, Suzhou, Jiangsu 215000 (CN); LI, Dan Dan, Suzhou, Jiangsu 215000 (CN); SCHNEEGASS, Daniel, Beijing 100016 (CN)
(74) Representative: Isarpatent
(86) International application number: PCT/CN2019/102080
(87) International publication number: WO 2021/031211

(57) **Abstract**

Provided is a method for labeling a data point. The method comprises: executing a labeling operation on a target data set, wherein the target data set comprises a plurality of data points, each data point representing a service instance, and the labeling operation comprises: dividing the target data set into a plurality of first subsets; for each of the first subset, receiving a user input used for designating a mark for at least one data point in the first subset, wherein the mark is used for illustrating the situation of the service instance represented by the data point; determining whether the similarity between the mark and a mark previously designated for at least one data point in the target data set satisfies a preset condition; in response to determining that the preset condition is not satisfied, taking the first subset as a target data set to re-execute the labeling operation; and in response to determining that the preset condition is satisfied, setting, for each data point in the first subset, a mark associated with the mark previously designated for at least one data point in the target data set.

## Description

### Technical Field

The present disclosure relates generally to information processing, and more particularly to a method and an apparatus for labeling a data point.

### Background Art

Data visualization refers to visual representation of data, which is aimed at communicating information contained in the data clearly and efficiently in a graphical manner. A data set consisting of a plurality of data points provides a basis for data visualization. In an exemplary typical application scenario, a data visualization tool may obtain data, such as temperature data, pressure data, and humidity data, collected by Internet of Things (IoT) sensors at a certain frequency, and a large number of data points formed by such sensor data are visualized, plotted as a graph (for example, a data distribution graph), and presented on a visual user interface.

With the increase in the number of application scenarios, service instances represented by data points have become increasingly complex, and, for example, a data point may represent a combination of data collected by more than one IoT sensor at a time. Generally, only experts in the service field who are familiar with specific services can understand and distinguish between different situations reflected by different data points, for example, whether a corresponding service instance is normal. Therefore, it is necessary, by experts in the service field, or at least with the assistance of experts in the service field, to label each obtained data point to be used for data visualization, and add marks to illustrate corresponding situations, thereby facilitating related data analysis, including classification of data points.

### Summary of the Invention

This summary of the invention is provided to explain some selected concepts in a simplified form, which will be further described below in the section on specific embodiments. This summary of the invention is not intended to identify any key features or essential features of the claimed subject matter, nor is it intended for use in helping to define the scope of the claimed subject matter.

According to one aspect of the present disclosure, a method for labeling a data point is provided, comprising: executing a labeling operation on a target data set, wherein the target data set comprises a plurality of data points, each data point representing a service instance, and the labeling operation comprises: dividing the target data set into a plurality of first subsets; for each of the first subsets: receiving a user input used for designating a mark for at least one data point in the first subset, wherein the mark is used for illustrating the situation of the service instance represented by the data point; determining whether the similarity between the mark and a mark previously designated for at least one data point in the target data set satisfies a preset condition; in response to determining that the preset condition is not satisfied, taking the first subset as a target data set to re-execute the labeling operation; and in response to determining that the preset condition is satisfied, setting, for each data point in the first subset, a mark associated with the mark previously designated for at least one data point in the target data set.

According to another aspect of the present disclosure, an apparatus for labeling a data point is provided, comprising: a module for executing a labeling operation on a target data set, wherein the target data set comprises a plurality of data points, each data point representing a service instance, and the module for executing a labeling operation on a target data set comprises: a module for dividing the target data set into a plurality of first subsets; for each of the plurality of first subsets: a module for receiving an user input used for designating a mark for at least one data point in the first subset, wherein the mark is used for illustrating the situation of the service instance represented by the data point; a module for determining whether the similarity between the mark and a mark previously designated for at least one data point in the target data set satisfies a preset condition; a module for, in response to determining that the preset condition is not satisfied, taking the first subset as a target data set to re-execute the labeling operation; and a module for, in response to determining that the preset condition is satisfied, setting, for each data point in the first subset, a mark associated with the mark previously designated for at least one data point in the target data set.

According to yet another aspect of the present disclosure, a computing device is provided, comprising: a memory for storing an instruction; and at least one processor coupled to the memory, wherein the instruction, when executed by the at least one processor, causes the at least one processor to execute a labeling operation on a target data set, wherein the target data set comprises a plurality of data points, each data point representing a service instance, and the labeling operation comprises: dividing the target data set into a plurality of first subsets; for each of the first subsets: receiving a user input used for designating a mark for at least one data point in the first subset, wherein the mark is used for illustrating the situation of the service instance represented by the data point; determining whether the similarity between the mark and a mark previously designated for at least one data point in the target data set satisfies a preset condition; in response to determining that the preset condition is not satisfied, taking the first subset as a target data set to re-execute the labeling operation; and in response to determining that the preset condition is satisfied, setting, for each data point in the first subset, a mark associated with the mark previously designated for at least one data point in the target data set.

According to still another aspect of the present disclosure, a computer-readable storage medium is provided, on which an instruction is stored which, when executed by at least one processor, causes the at least one processor to execute a labeling operation on a target data set, wherein the target data set comprises a plurality of data points, each data point representing a service instance, and the labeling operation comprises: dividing the target data set into a plurality of first subsets; for each of the first subsets: receiving a user input used for designating a mark for at least one data point in the first subset, wherein the mark is used for illustrating the situation of the service instance represented by the data point; determining whether the similarity between the mark and a mark previously designated for at least one data point in the target data set satisfies a preset condition; in response to determining that the preset condition is not satisfied, taking the first subset as a target data set to re-execute the labeling operation; and in response to determining that the preset condition is satisfied, setting, for each data point in the first subset, a mark associated with the mark previously designated for at least one data point in the target data set.

Various aspects of the present disclosure provide a mechanism for labeling a data point on the basis of machine learning, wherein, advantageously, the provided adaptive labeling mechanism only requires users (experts in the service field, or operators at least assisted by experts in the service field) to designate marks for a small number of data points in a target data set, and, relying on artificial intelligence, manually designated marks are applied to all the data points in the target data set, which allows a remarkable reduction in manual labor required of users while maintaining high classification accuracy.

In addition, in an example of any of the above-described aspects, optionally, it may further comprise: dividing an initial data set into a plurality of second subsets; for each of the plurality of second subsets, receiving a user input used for designating a mark for at least one data point in the second subset; and selecting one of the plurality of second subsets as the target data set.

Advantageously, the operations on the initial data set in the above-described examples are also implemented by some operations similar to those in the aforementioned adaptive labeling mechanism, so that set operation processes and corresponding modules may be partially reused during implementation, and manual labor required of users may be further reduced, which improves the user experience.

Further, in an example of any of the above-described aspects, when, in response to determining that the preset condition is satisfied, setting, for each data point in the first subset, a mark associated with the mark previously designated for at least one data point in the target data set, optionally, it may comprise: setting a mark previously designated for at least one data point in the target data set as the mark for each data point in the first subset.

Advantageously, in the above-described example, setting the mark previously designated for at least one data point in the target data set as the mark for each data point in the current subset can simplify the operation while ensuring the labeling accuracy of the labeling operation.

Further, in an example of any of the above-described aspects, when determining whether the similarity between the mark and a mark previously designated for at least one data point in the target data set satisfies a preset condition, optionally, it may comprise: determining the semantic similarity between the mark and the mark previously designated for at least one data point in the target data set; and determining whether the semantic similarity exceeds a preset threshold.

Advantageously, in the above-described example, since determination is performed on the basis of semantic similarity and more complex marks may be processed, more complex service situations may be handled, and the requirements for user input are also relaxed.

### Brief Description of the Drawings

Implementations of the present disclosure are illustrated in an exemplary manner, rather than in a limiting manner, in the drawings, and the same reference numerals in the drawings denote the same or similar components, wherein:
Fig. 1 is an exemplary environment in which some implementations of the present disclosure may be achieved;
Fig. 2 is an example of a data distribution map containing a plurality of data points;
Fig. 3 is an example of a data distribution map containing a plurality of data points;
Fig. 4 is an example of a data distribution map containing a plurality of data points;
Fig. 5 is a flowchart of an exemplary method according to one implementation of the present disclosure;
Fig. 6 shows some exemplary operations according to one implementation of the present disclosure;
Fig. 7 is an example of a data distribution map containing a plurality of data points;
Fig. 8 is a block diagram of an exemplary apparatus according to one implementation of the present disclosure; and
Fig. 9 is a block diagram of an exemplary computing device according to one implementation of the present disclosure.

### List of reference signs

110: Device 120: At least one data source 130: Network
510: Designate a portion of an initial data set as a target data set
520: Execute a labeling operation on the target data set
521: Divide the target data set into a plurality of first subsets
522: Receive a user input used for designating a mark for at least one data point in the current first subset
523: Determine the similarity between the mark and a mark previously designated for at least one data point in the target data set
524: If the similarity does not satisfy a preset condition, take the first subset as a target data set to re-execute the labeling operation
525: If the similarity satisfies the preset condition, set a mark for each data point in the first subset
810-850: Module
910: Processor
920: Memory

### Specific Embodiments

In the following description, for explanation purposes, meticulous details are given. It is understandable, however, that implementations of the present invention may be achieved without such meticulous details. In other instances, no well-known circuits, structures or techniques are shown in detail, so that an understanding of this description is not affected.

References throughout the description to "one implementation", "implementation", "exemplary implementation", "some implementations", "various implementations," etc. mean that the described implementations of the invention may include particular features, structures or characteristics, but this does not mean that every implementation must contain these particular features, structures or characteristics. Further, some implementations may have some, all, or none of the features described for other implementations.

In the following description and claims, the terms "coupled" and "connected" as well as derivatives thereof may be used. It should be understood that these terms are not intended as synonyms for each other. Conversely, in a particular implementation, "connected" is used to mean that two or more components are in direct physical or electrical contact with each other, while "coupled" is used to mean that two or more components cooperate or interact with each other, but that they may or may not be in direct physical or electrical contact with each other.

A data visualization tool can plot a data distribution map of a large number of data points and present it to a user. With the increase in the number of application scenarios, service instances represented by data points have become increasingly complex, and, in order to carry out meaningful data analysis in terms of services, including correct classification of data points, it is necessary, by experts in the service field, or at least with the assistance of experts in the service field, to add marks for each obtained data point to illustrate the corresponding situation. However, this requires considerable manual labor.

The present disclosure is aimed at solving the above-mentioned problems by providing a mechanism for labeling a data point on the basis of machine learning, wherein, by the mechanism, users (experts in the service field, or operators at least assisted by experts in the service field) are only required to designate marks for a small number of data points in a target data set, and, relying on artificial intelligence, manually designated marks are applied to all the data points in the target data set, which allows a remarkable reduction in manual labor required of users while maintaining high classification accuracy.

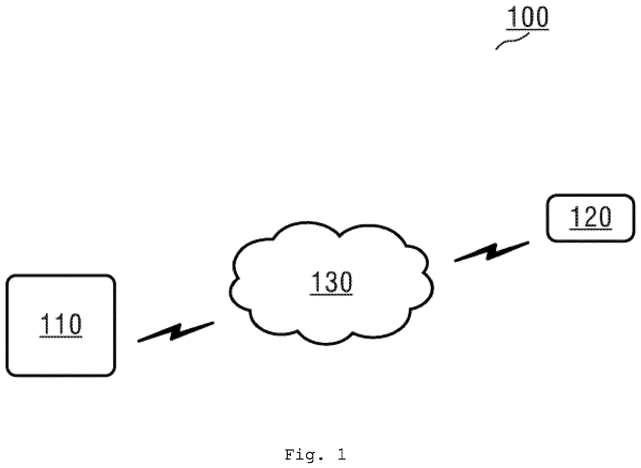

See Fig. 1, which shows an exemplary operating environment 100 in which some implementations of the present disclosure may be achieved. The operating environment 100 may comprise a device 110 and at least one data source 120. In some implementations, the device 110 and the data source 120 may be communicatively coupled to each other through a network 130.

In some examples, a data visualization tool may run on the device 110 for visualizing data obtained from at least one data source 120. In some examples, a mechanism for labeling a data point on the basis of machine learning provided in the present disclosure may be implemented as part of a data visualization tool, for example, as a plug-in thereof. In some other examples, the mechanism may be implemented as a separate component on the device 110.

Examples of the device 110 may include, but are not limited to: mobile devices, personal digital assistants (PDAs), wearable devices, smartphones, cellular phones, handheld devices, messaging devices, computers, personal computers (PCs), desktop computers, laptop computers, notebook computers, handheld computers, tablet computers, workstations, mini computers, mainframe computers, supercomputers, network devices, web devices, processor-based systems, multiprocessor systems, consumer electronics, programmable consumer electronics, televisions, digital televisions, set-top boxes, or a combination thereof.

At least one data source 120 is used to provide data for manipulation by a data visualization tool on the device 110. Exemplarily, rather than as a limitation, the data source 120 may include various types of sensors, such as image sensor, temperature sensor, pressure sensor, humidity sensor, and current sensor. In some examples, the sensor 120 may be configured to collect data at a fixed frequency, while in some other examples, the data sampling frequency of the sensor 120 is adjustable, for example, in response to an indicator signal from the outside (for example, the device 110). In addition, in some examples, the data source 120 may be a database, a memory device, or any other type of device for providing data. The present disclosure is not limited to a particular type of data source.

In addition, data collected by at least one data source 120 may be directly provided to the device 110 for data visualization operations, or may first be stored in the device 110 (for example, in a memory contained therein) or in a database/server (not shown) communicatively coupled to the device 110 and/or the data source 120 through the network 130, before being accessed as needed.

The network 130 may comprise any type of wired or wireless communication network, or a combination of wired and wireless networks. In some examples, the network 130 may comprise a wide area network (WAN), a local area network (LAN), a wireless network, a public telephone network, an intranet, and the Internet of Things (IoT). Further, although a single network 130 is shown here, the network 130 may be configured to comprise a plurality of networks.

Further, although an exemplary operating environment according to some implementations of the present disclosure has been described above in conjunction with Fig. 1, in some other implementations, the device 110 and the at least one data source 120 may also be communicatively coupled to each other directly, without using a network. In some examples, the device 110 may be deployed on an industrial site, and data collected by various industrial sensors on the industrial site may be considered as the data source 120. The present disclosure is not limited to the specific architecture shown in Fig. 1.

Further, in some examples, the data visualization tool mentioned above and the mechanism for labeling a data point on the basis of machine learning of the present disclosure may be deployed in a distributed computing environment, and may also be implemented using cloud computing technologies.

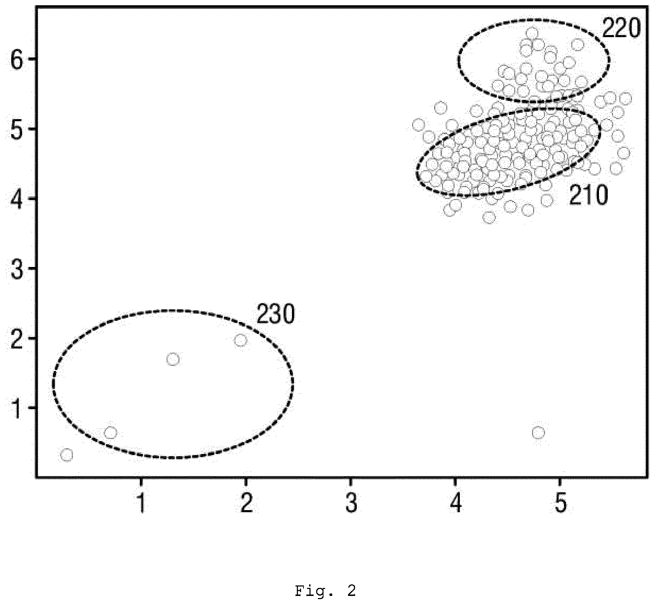

Fig. 2 shows an example of a data distribution map containing a plurality of data points. The data distribution diagram shown in Fig. 2 is for the operation of a numerically controlled machine (CNC). In Fig. 2, each data point in the data set represents a service instance, and here it is a vector composed of two feature elements that are respectively used to represent the current values of the two spindles of the CNC at one moment, wherein the current values may, for example, respectively come from a current sensor arranged in the corresponding spindle circuit. In Fig. 2, the horizontal direction (abscissa) represents the current value of the spindle 1, and the vertical direction (ordinate) represents the current value of the spindle 2.

Common data analysts lacking professional knowledge in the CNC field, only from the data distribution shape of these data points shown in Fig. 2, generally consider those data points contained in the areas encircled by, for example, the ellipse 210 to correspond to normal machine operating conditions of the CNC, and consider all the areas encircled by, for example, the other two ellipses 220 and 230 to correspond to abnormal conditions of the CNC. However, it may be readily apparent to an industry expert familiar with the CNC that the ellipse 220 corresponds to true anomalies, while the ellipse 230 actually corresponds to false anomalies that occur in some cases. This shows that it is very important to add marks (knowledge) to these data points to illustrate the specific situation of the service instance represented by the corresponding data point, such as distinguishing between true and false anomalies and normal CNC machine operation. Only classification of data points and associated data analysis based on such important marks has practical value in terms of services.

Although a service instance has been explained above in combination with the current values of the two spindles of the CNC, those of ordinary skill in the art can understand that a service instance for a CNC may comprise more complex structures, and, for example, a service instance may be included in a combination of more sensor data that may be used to describe the CNC operation state at one moment.

Further, it is understandable that as the number of data points contained in a data set increases, the labeling of these data points one by one by experts in the service field will become a very time-consuming and labor-intensive task.

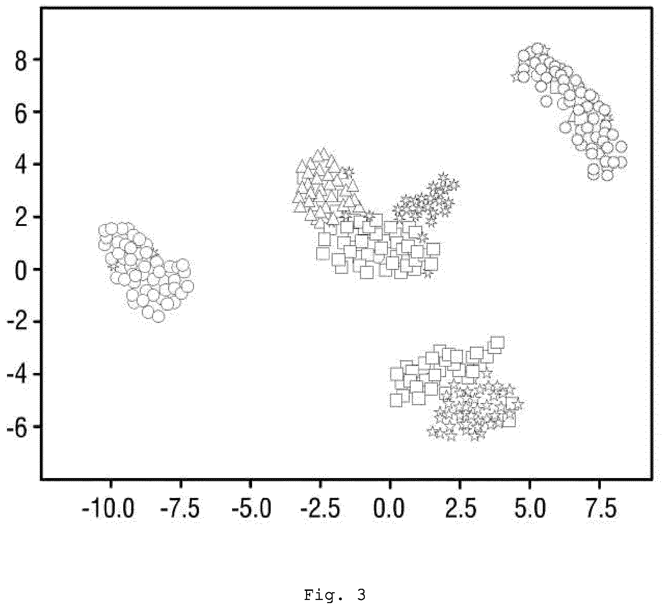

Fig. 3 shows an example of a data distribution map containing a plurality of data points. Fig. 3 may correspond to a view presented on a graphical user interface (GUI) of the data visualization tool. In Fig. 3, the horizontal direction represents the abscissa, and the vertical direction represents the ordinate, wherein there is no specific limitation on the actual physical meanings carried by the abscissa and the ordinate, respectively. In some implementations in the present disclosure, each data point in the data set shown in Fig. 3 may represent a more complex service instance. In one example, each data point may represent a relationship graph, for example, a curve diagram, which is used to represent the relationship between several variables associated with a specific service. As another example, each data point can also represent an image, and, for example, in order to identify a production defect at a fixed position on an industrial assembly line, an outside drawing of a circuit board produced at the position collected by an image sensor is used.

Some appropriate mechanisms may be used to reduce the dimensionality of complex service instances, and, for example, in the previous example, the average value of all pixels in the relationship graph or image may be calculated to compress the relationship graph or image to a data point, so that such data points are displayed in a low-dimensional (for example, two-dimensional) data distribution map. In addition, as the complexity of the service instance represented by a data point increases, the amount and complexity of the content of the marks that may be added to the data point will also increase, because more descriptions of the situation of the service instance, such as interpretation of a specific operating status of the corresponding machine, analysis of the cause of a failure, and matters needing attention, are required.

Continue to see Fig. 3, which shows correct labeling of data points in the entire data set, wherein each data point is manually added one by one by experts in the service field to illustrate the situation of the service instance represented by the data point. In addition, data points are distinguished by different shapes depending on the situation of the corresponding service instance described by the marks added to the data points. In other words, intuitively, a difference in shape can reflect a difference in mark.

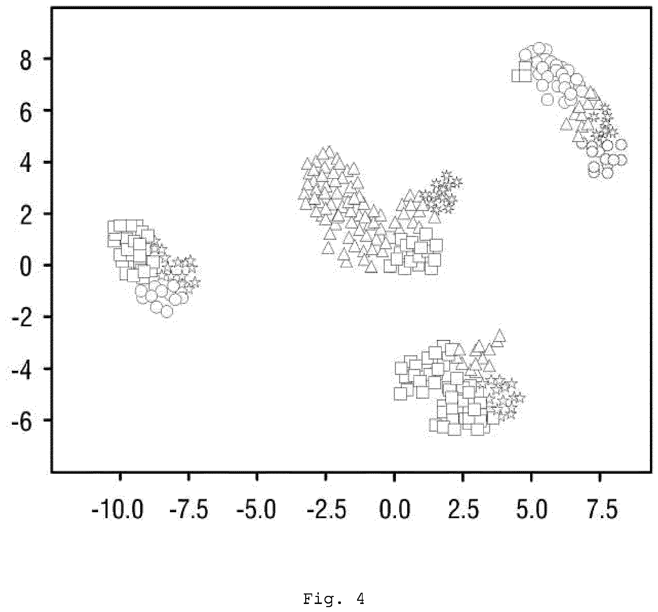

Fig. 4 shows an example of a data distribution map containing a plurality of data points. In this exemplary explanation, Fig. 4 and Fig. 3 correspond to the same data set, but the difference is that no experts in the service field have added any data points to each data point in Fig. 4 to illustrate the situation of the service instance represented by the data point. In contrast, Fig. 4 shows the results of automatic classification of these data points on the basis of a conventional unsupervised clustering algorithm. In Fig. 4, different shapes indicate that the corresponding data points belong to different clusters.

It is clear from Fig. 3 that the classification of data points solely on the basis of the unsupervised clustering algorithm in Fig. 4 is obviously different from the classification based on correct labeling as shown in Fig. 3, wherein some data points are incorrectly divided in Fig. 4.

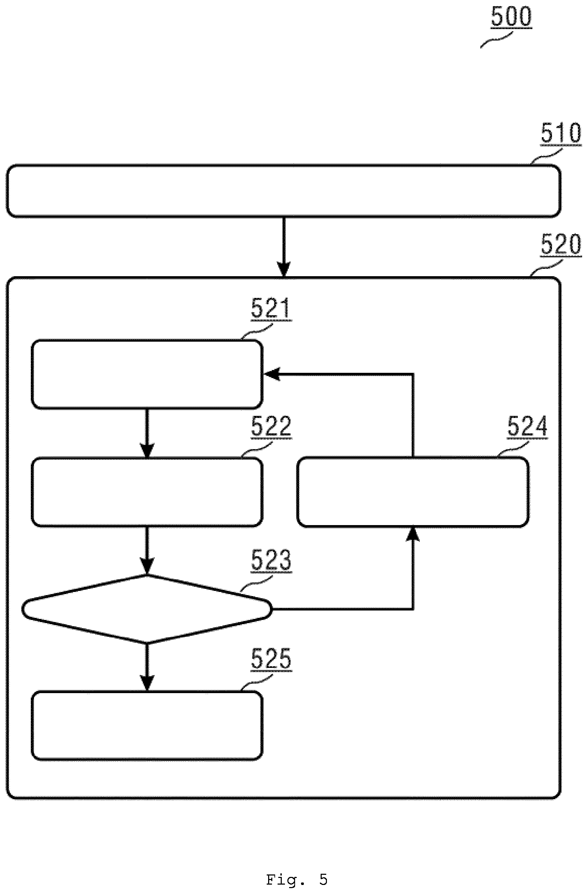

Next, refer to Fig. 5, and Fig. 5 is a flowchart of an exemplary method 500 according to one implementation of the present disclosure. For example, the method 500 may be implemented in the device 110 shown in Fig. 1 or any similar or related entity. In one example, the method 500 may be part of operations executed by a data visualization tool running on the device 110. The exemplary method 500 may be used to adaptively label data points so that these data points may be correctly classified accordingly, requiring only a small amount of manual labor by users (experts in the service field and/or relevant operators), which greatly reduces the burden on users and improves user experience.

Refer to Fig. 5, which shows that the method 500 begins at step 510 and, in this step, a portion of an initial data set is set as a target data set. The initial data set comprises a plurality of data points, each data point representing a service instance.

In some examples, the service instance represented by each data point in the data set may be a vector composed of more than one service-associated feature element for one service. For example, each feature element is data collected by one corresponding sensor. As exemplified above in conjunction with Fig. 2, for a CNC, such a service instance may be a vector composed of current values from two current sensors deployed in the two spindle circuits of the CNC. In addition, a service instance represented by each data point may also have a more complex structure. However, the present disclosure is not limited to a specific type of data point/service instance. Objectives of collecting data points/service instances may include, but are not limited to, monitoring the operation status of the service to identify possible problems, and so on.

The process of the method 500 then proceeds to step 520, where a labeling operation is executed on the target data set to set a mark for each data point in the target data set. As mentioned above, the mark is used to illustrate the situation of the service instance represented by the corresponding data point. According to one implementation of the present disclosure, the labeling operation in step 520 may be executed iteratively until all the data points in the target data set are labeled.

The operations in step 520 will be described in detail below.

Specifically, executing a labeling operation on a target data set may comprise: dividing the target data set into a plurality of first subsets in step 521. In some examples, cluster analysis may be performed to divide the target data set into a plurality of first subsets. Cluster analysis is a machine learning technique and unsupervised learning, in which attempts are made to divide the data points in a data set into a plurality of different subsets, and each subset may be called a cluster. The K-means clustering algorithm, as one of the most commonly used and important clustering algorithms for cluster analysis, is simple and efficient, and can still operate effectively for a large number of data points to meet actual production needs. In a preferred implementation, the K-means clustering algorithm may be used in step 521 to divide the data points in the target data set into a plurality of first subsets.

Relevant parameters of the K-means clustering algorithm may be set depending on the actual situation. For example, relevant parameters may include the number of clusters/subsets, and the setting of the number of subsets may depend on the number of data points contained in the processed data set; additionally or alternatively, the setting of the number of subsets may also depend on the requirements of the services represented by the data points in the data set; additionally or alternatively, the setting of the number of subsets may also depend on the experience of experts in the service field and/or data analysts. It is also feasible to consider other factors.

In addition, in step 521, any other suitable clustering algorithms other than the K-means clustering algorithm, including, but not limited to, those clustering algorithms whose parameters are the number of clusters/subsets, may also be used.

In one specific example, the graphical user interface of the data visualization tool may present a data distribution map of data points (including the target data set) collected for a service, and for classification of a data set (target data set), for example, classification using the above-mentioned K-means clustering algorithm, can provide controls allowing a user to execute operations such as viewing/inputting/changing related parameters of the K-means clustering algorithm. In addition, the graphical user interface of the data visualization tool can also provide an animated display of the division process, so that the user can visually monitor the entire process.

After step 521, the operation process proceeds to step 522, that is, receiving a user input for each of the plurality of first subsets divided from the target data set, the user input being used for designating a mark for at least one data point in the current first subset.

In some examples, selection of at least one data point in the first subset may be performed automatically, which means that at least one data point is automatically selected from the first subset by, for example, a data visualization tool, and the selected data points are highlighted to the user together or one by one for the user to designate marks for them respectively. In some other examples, the user may manually select at least one data point from the presented first subset and then designate marks for them respectively. The present disclosure is not limited to the specific examples described above. In a preferred implementation, selection of at least one data point in the first subset is random. In addition, in some examples given below, for convenience of description, it is assumed that a user input received in step 522 is to designate a mark for a data point in the first subset, which, as is comprehensible in conjunction with the following description, minimizes the amount of manual labor required of the user.

The mark is used for illustrating the situation of the service instance represented by the corresponding data point. In some implementations of the present disclosure, such a mark may be a simple symbolic sign, a word, a phrase, a more complex sentence, even a paragraph, and so on. In some examples, the mark may come from a preset mark set, and a user may select an appropriate mark from the preset mark set when designating a mark for a data point. In some other examples, the mark may also come from a user's free input, for example, a user inputting a body of text. The present disclosure is not limited to the specific examples described above, and a combination of these and other examples is possible as long as it helps to clearly and accurately illustrate the situation of the corresponding service instance.

In addition, in some examples, in order to provide the user with convenience in labeling a selected data point, some relevant information on the data point may be presented to the user, for example, presenting real data on the service instance represented by the data point, such as values of each sensor, graphs, and images, to the user, as exemplified previously.

In a specific example, on the graphical user interface of the data visualization tool, for the current first subset, a selected data point to be labeled may be stressed by means of highlighting and/or zooming-in. For example, when manually selecting data points, the user can select a data point by hovering over or clicking the data point with a pointing tool, for example, a mouse, or by another means, and the selected data point is highlighted and/or zoomed-in. Additionally, after a data point is selected, relevant information on the selected data point may be presented in the form of a pop-up menu or a bubble, so that the user can perform labeling with reference thereto. Correspondingly, at least one control, such as a drop-down menu and a text box, is further provided on the graphical user interface of the data visualization tool, allowing the user to conveniently select/input the content of the mark to be added.

In addition, in order to facilitate subsequent use, in some examples, a mark designated for a data point in the first subset may also be stored in association with the identifiers of the first subset and/or the identifier of the data point.

The operation process then proceeds to step 523, where it is determined whether the similarity between a mark designated by a user input in step 522 for at least one data point in the current first subset and a mark previously designated for at least one data point in the target data set satisfies a preset condition. The preset condition may be a condition or a combination of a series of conditions, and the series of conditions may further comprise constraints on the current first subset and/or the target data set, and in other aspects. It is understandable that from the perspective of the set relationship, the target data set is the parent set of the first subset here.

In some examples, the determining operation in step 523 may comprise determining whether a mark designated for at least one data point in the first subset is equal to a mark previously designated for at least one data point in the target data set. This may be particularly applicable in some scenarios where marks are relatively simple. For example, if the user designates a mark "N" selected from a preset mark set for a data point in the current first subset (assuming N here stands for normal), and a mark previously designated by the user for a data point in the target data set (that is, the parent set of the first subset) is also the mark "N" selected from the preset mark set, it may be directly determined that the two are equal and the similarity between them is deemed to satisfy the preset condition.

In some other examples, the determining operation may comprise determining whether the similarity between a mark designated for at least one data point in the first subset and a mark previously designated for at least one data point in the target data set exceeds a preset threshold. Here, any available form of measuring similarity between two marks is feasible, and the present disclosure is not limited to a particular implementation. A threshold may be set by standards for the same type of services, or may be manually designated by the user, for example, depending on specific needs of services, experience of experts in the service field and/or data analysts, and so on. In a preferred implementation of the present disclosure, especially in a relatively complex scenario where the mark is a sentence, a paragraph, etc., it is possible to determine the semantic similarity between two marks and then determine whether the semantic similarity exceeds a preset threshold (for example, 80%), so as to perform step 523. Using a determination method based on semantic similarity, on the one hand, more complex mark content may be processed, so that more complex service situations may be handled, and, on the other hand, the requirements for a user input are relaxed, so that a user can provide an input freely, rather than having to make a selection from a preset mark set. In addition, in some examples, for the calculation of semantic similarity, a natural language processing technique, for example, word embedding or sentence embedding, may be used to convert two marks into vector representations respectively, and the semantic similarity between them may be calculated correspondingly.

Further, in a specific example, after the user has inputted a mark designated for at least one data point in the first subset, a result of the above-described similarity determination may be displayed on a graphical user interface of the data visualization tool.

Next, the operation process proceeds to step 524, in which, in response to determining that the similarity does not satisfy the preset condition (in other words, the determination result in step 523 is "No"), the current first subset is used as the target data set, which means that the target data set used as the parent set in this case has been updated to the first subset that does not meet the preset condition in the determination performed in step 523, and then the operation process returns to step 521 to reperform this step and steps subsequent thereto.

It may be understood that the above-described operations included in step 520 are a series of operations performed iteratively until it is found that in a certain iteration, the similarity determination executed on the current first subset satisfies a preset condition. In addition, the preset condition, for example, may further comprise: the number of current iterations having exceeded a specified number of times (for example, the specified number of times is 10) relative to the initially set target data set; in the current iteration, the number of data points in the first subset already being not greater than a specified number (for example, the specified number is 1), and so on. Those of ordinary skill in the art can understand that the preset condition may comprise any combination of the above-described and other constraints.

On the other hand, in response to determining that the similarity satisfies the preset condition (in other words, the determination result in step 523 is "Yes"), in step 525, a mark associated with a mark previously designated for at least one data point in the target data set is set for each data point in the current first subset.

In some examples, setting of marks in step 525 may comprise: setting a mark previously designated for at least one data point in the target data set as the mark for each data point in the current first subset. For example, if the mark previously designated for a data point in the target data set is X1, and the mark designated for a data point in the current first subset (which is one of the subsets of the target data set) is X2, where X2 and X1 are the same, or although the two are different but the similarity still satisfies the preset condition, then X1 may be set as the mark of each data point in the first subset. In other words, if the determination result in step 523 is "Yes", it may be considered that the mark previously designated for a data point in the target data set (parent set) is appropriate, and in this case, the mark may be directly used as the mark of each data point in the current first subset, without the need to use a different mark for the latter.

In some other examples, a mark set in step 525 may also be determined on the basis of a mark previously designated for at least one data point in the target data set (parent set), a mark designated for at least one data point in the current first subset, and/or a mark designated for at least one data point in a brother subset of the current first subset (that is, at least one other first subset of the plurality of first subsets divided from the target data set), etc. The present disclosure is not limited to the above-described or other specific examples.

It is understandable that, after the operation in step 525 is performed for the current first subset, for all the brother subsets of the first subset (that is, other first subsets in the plurality of first subsets divided from the target data set in step 521), the operations in 522-525 also apply, so that all the data points in the target data set in each iteration are appropriately labeled, and ultimately all the data points in the initially set target data set are also appropriately labeled.

In addition, those of ordinary skill in the art can understand that if, in each iteration of the labeling operation on the target data set, only one data point is selected from each of the plurality of first subsets of the target data set, and a user designates a mark therefor, then an adaptive labeling mechanism according to the present disclosure makes it possible to minimize the manual labor required of the user. On the other hand, the user may also designate marks for more than one data point in the current first subset in step 522, in which case, in the subsequent steps 523-525, if a mark designated for at least one data point in the first subset is involved, and, similarly, a mark previously designated for at least one data point in the target data set is involved, this may refer to the result of performing a specific operation on the corresponding marks of more than one data point, the operation including, but not limited to, calculating an average of more than one mark.

In addition, in a specific example, a graphical user interface of the data visualization tool may also provide an animated display of the classification of the data points in the data set according to the marks set for these data points, wherein different colors/grayscales/shapes/patterns and various possible forms, or any combination thereof, are used to indicate that the corresponding data points belong to different clusters.

In a preferred implementation, setting a portion of an initial data set as a target data set in step 510 may comprise: dividing the initial data set into a plurality of second subsets; for each of the plurality of second subsets, receiving a user input used for designating a mark for at least one data point in the second subset; and selecting one of the plurality of second subsets as the target data set.

The operation process of dividing the initial data set into a plurality of second subsets is similar to the operation process of dividing the target data set into a plurality of first subsets in step 521 as discussed above, for which reference may be made to the preceding description. In some examples, cluster analysis may be performed to divide the initial data set into a plurality of second subsets. In a preferred implementation, the K-means clustering algorithm may be employed in this step to divide the initial data set into a plurality of second subsets. It should be noted that, although in the previous description of a specific example of step 521 it is exemplified that the K-means clustering algorithm may be used, since the operation object in this step is different from that in step 521, specific parameter settings for the K-means clustering algorithm in the two processes may differ.

Further, for each of the plurality of second subsets, the operation process of receiving a user input used for designating a mark for at least one data point in the second subset is similar to the operation process of receiving a mark designated for at least one data point in the first subset in step 522 as discussed above, for which reference may also be made to the preceding description. In some examples, selection of at least one data point to be labeled in the second subset may be performed automatically, or may be performed manually by a user, and the present disclosure is not limited thereto. Additionally, in a preferred implementation, selection of at least one data point in the second subset is random.

In addition, it is understandable that, by sequentially setting each of the plurality of second subsets divided from the initial data set into a target data set, the labeling operation 520 as detailed above may be performed to set proper marks for all the data points in the initial data set.

In the above-described example, an operation on the initial data set may also be implemented by some operations similar to the aforementioned labeling operation on the target data set, so that a set operation process and corresponding module may be partially reused in implementation and the manual labor required of a user is further reduced, which improves user experience.

Although a specific operation example of step 510 is given above, those of ordinary skill in the art can understand that it is also possible to set a target data set from an initial data set by another means, and the present disclosure is not limited to the above-described specific example.

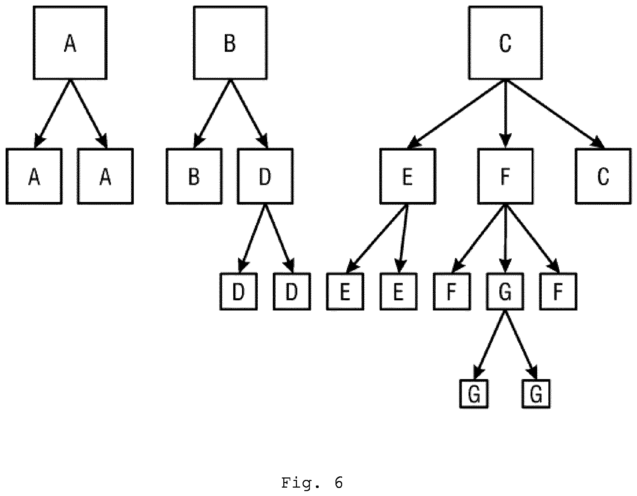

Next, in conjunction with the specific example shown in Fig. 6, the processes of some of the operations described above will be further described.

In the example shown in Fig. 6, the initial data set is divided, using a clustering algorithm, into three subsets: first-level subsets A, B, and C shown at the top. In a similar manner, each subset is in turn divided into a plurality of second-level subsets using a clustering algorithm. In addition, some second-level subsets may be subdivided into a plurality of third-level subsets... and so on. For convenience of exemplification, the letter of each subset is the mark designated, by a user input, for a data point in the subset in the manner described herein, referred to herein as a set mark.

Taking the example on the left in Fig. 6 as an example, the first-level subset A is divided into two second-level subsets and, on the basis of the labeling by the user, the set marks of these two second-level subsets are both A, which is the same as the set mark of the sets at the level above them, satisfying the preset condition. In this case, without the need to further divide the two second-level subsets using a clustering algorithm, it is possible to, for example, set mark A for all the data points in the two second-level subsets (that is, all the data points in the sets at the level above them).

Next, referring to the example shown in the middle of Fig. 6, the first-level subset B is divided into two second-level subsets B and D. The set mark of the first second-level subset is B, which is the same as the set mark of the sets at the level above it, and, therefore, the mark B is set for all the data points in the second-level subset, rather than further division thereof. However, the set mark of the second second-level subset is D, which is different from the set mark B of the sets at the level above it, and thus the preset condition is not satisfied, in which case a clustering algorithm is needed for further division thereof. As shown in the figure, this second-level subset D is divided into two third-level subsets. Now, the set marks of the two third-level subsets are both D, which is the same as the set mark of the set at the level above them and satisfies the preset conditions, and, therefore, mark D is set for all the data points in these two third-level subsets (that is, all the data points in the set at the level above them), rather than further division of the two third-level subsets.

The example on the right of Fig. 6 shows the division related to the first-level subset C, with set marks C, E, F, and G correspondingly, and as the processing logic used is consistent with that used in the previous two examples, it will not be described in detail again herein.

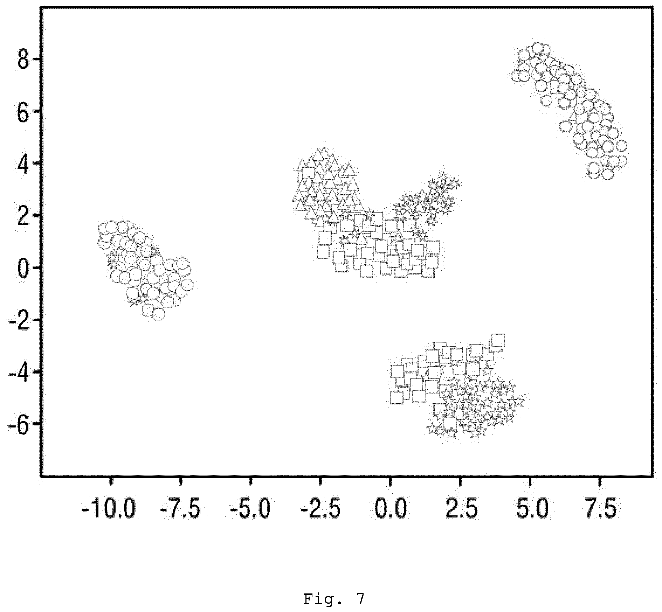

Fig. 7 shows an example of a data distribution map containing a plurality of data points. In this exemplification, Fig. 7 and Fig. 3 correspond to the same data set, but Fig. 7 shows the results of applying a method according to an implementation of the present disclosure to the data set, wherein different clusters to which the corresponding data points belong are distinguished by different shapes, indicating that different marks are set for them. It can clearly be seen that the results shown in Fig. 7 are very similar to the correct labeling in Fig. 3. Generally, with a mechanism of the present disclosure, 85% classification accuracy may be achieved by providing feedback from users for only 3% of the data points in the entire data set, that is, labeling the data points by experts in the service field, while the remaining data points are automatically labeled by a machine.

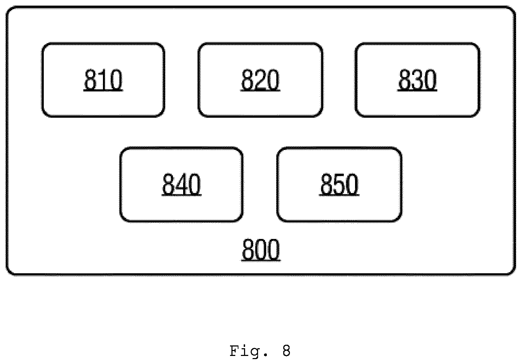

Next, refer to Fig. 8, and Fig. 8 is a block diagram of an exemplary apparatus 800 according to one implementation of the present disclosure. For example, the apparatus 800 may be implemented in the device 110 shown in Fig. 1 or any similar or related entity.

The exemplary apparatus 800 is used to label a data point. More specifically, a function implemented by the apparatus 800 may comprise executing a labeling operation on a target data set, wherein the target data set comprises a plurality of data points, each data point representing a service instance. As shown in Fig. 8, the exemplary apparatus 800 may comprise a module 810, and the module 810 is used for dividing the target data set into a plurality of first subsets. In addition, the apparatus 800 may further comprise a module 820, and, for each of the first subsets, the module 820 is used for receiving a user input used for designating a mark for at least one data point in the first subset, wherein the mark is used for illustrating the situation of the service instance represented by the data point. In addition, the apparatus 800 may further comprise a module 830, and the module 830 is used for determining whether the similarity between the mark and a mark previously designated for at least one data point in the target data set satisfies a preset condition. In addition, the apparatus 800 may further comprise a module 840, and the module 840 is used for, in response to determining that the preset condition is not satisfied, taking the first subset as a target data set to re-execute the labeling operation. In addition, the apparatus 800 may further comprise a module 850, and the module 850 is used for, in response to determining that the preset condition is satisfied, setting, for each data point in the first subset, a mark associated with the mark previously designated for at least one data point in the target data set.

It should be noted that although the apparatus 800 is shown as comprising the modules 810-850, the apparatus 800 may comprise more or fewer modules to implement various functions described herein. In some examples, the modules 810-850 may be included in one module for executing a labeling operation on a target data set, for example, corresponding to step 520 in Fig. 5. In addition, in some examples, the apparatus 800 may further comprise an additional module for executing another operation already explained in the description, for example, step 510 in Fig. 5. Those of ordinary skill in the art will appreciate that the exemplary apparatus 800 may be implemented in software, hardware, firmware, or any combination thereof.

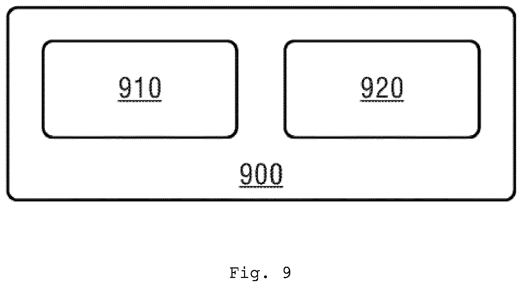

Now, refer to Fig. 9, which is a block diagram of an exemplary computing device 900 according to one implementation of the present disclosure. As shown in the figure, the exemplary computing device 900 may comprise at least one processing unit 910. The processing unit 910 may comprise any type of general-purpose processing unit/core (including, but not limited to: CPU or GPU), or special-purpose processing unit, core, circuit, controller, etc. In addition, the exemplary computing device 900 may further comprise a memory 920. The memory 920 may comprise any type of media that may be used to store data. In one implementation, the memory 920 is configured to store an instruction that, when executed, causes at least one processing unit 910 to execute operations described herein, such as the labeling operation 520 executed on a target data set and the entire exemplary method 500.

In addition, in some implementations, the computing device 900 may further be equipped with one or more peripheral components, which may include, but are not limited to, a display, a speaker, a mouse, and a keyboard. Furthermore, in some implementations, the computing device 900 may further be equipped with a communication interface, which may support various types of wired/wireless communication protocols to communicate with external communication networks. Examples of communication networks may include, but are not limited to: local area networks (LANs), metropolitan area networks (MANs), wide area networks (WANs), public telephone networks, Internet, intranets, Internet of Things, infrared networks, Bluetooth networks, and near-field communication (NFC) networks.

Furthermore, in some implementations, the above-described and other components may communicate with each other via one or more buses/interconnections that may support any suitable bus/interconnection protocols, including Peripheral Component Interconnect (PCI), PCI Express, Universal Serial Bus (USB), Serial Attached SCSI (SAS), Serial ATA (SATA), Fiber Channel (FC), System Management Bus (SMBus), or other suitable protocols.

Various implementations of the present disclosure may be achieved using a hardware unit, a software unit, or a combination thereof. Examples of hardware units may include devices, components, processors, microprocessors, circuits, circuit elements (for example, transistors, resistors, capacitors, inductors, etc.), integrated circuits, application specific integrated circuits (ASICs), programmable logic devices (PLDs), digital signal processors (DSPs), field programmable gate arrays (FPGAs), memory cells, logic gates, registers, semiconductor devices, chips, microchips, chipsets, etc. Examples of software elements may include software components, programs, applications, computer programs, application programs, system programs, machine programs, operating system software, middleware, firmware, software modules, routines, subroutines, functions, methods, procedures, software interfaces, application programming interfaces (APIs), instruction sets, computational code, computer code, code segments, computer code segments, words, values, symbols, or any combination thereof. Determination of whether an implementation is to be achieved using a hardware unit and/or a software unit can vary depending on factors such as desired computation rate, power level, thermal tolerance, processing cycle budget, input data rate, output data rate, memory resources, data bus speed, and other design or performance constraints, as expected for a given implementation.

Some implementations of the present disclosure may include manufactured articles. A manufactured article may comprise a storage medium for storing logic. Examples of storage media may include one or more types of computer-readable storage media capable of storing electronic data, such as volatile or nonvolatile memory, removable or non-removable memory, erasable or non-erasable memory, writable or rewritable memory, etc. Examples of logic may include various software elements, such as software components, programs, applications, computer programs, application programs, system programs, machine programs, operating system software, middleware, firmware, software modules, routines, subroutines, functions, methods, procedures, software interfaces, application programming interfaces (APIs), instruction sets, computational code, computer code, code segments, computer code segments, words, values, symbols, or any combination thereof. In some implementations, for example, a manufactured article may store an executable computer program instruction that, when executed by a processing unit, causes the processing unit to execute a method and/or operation described herein. Executable computer program instructions may include any suitable type of code, for example, source code, compiled code, interpreted code, executable code, static code, dynamic code, etc. An executable computer program instruction may be implemented according to a predefined computer language, method or syntax for instructing a computer to execute a designated function. The instruction may be implemented using any suitable high-level, low-level, object-oriented, visual, compiled and/or interpreted programming language.

What has been described above includes examples of the disclosed architecture. While it is indeed impossible to describe every conceivable combination of components and/or methods, those of ordinary skill in the art will appreciate that many other combinations and permutations are possible. Therefore, this novel architecture is intended to cover all such substitutions, alterations and variations that fall within the spirit and scope of the appended claims.

## Claims

1. A method for labeling a data point, comprising:
executing a labeling operation on a target data set, wherein the target data set comprises a plurality of data points, each data point representing a service instance, and the labeling operation comprises:
dividing the target data set into a plurality of first subsets;
for each of the first subsets:
receiving a user input used for designating a mark for at least one data point in the first subset, wherein the mark is used for illustrating the situation of the service instance represented by the data point;
determining whether the similarity between the mark and a mark previously designated for at least one data point in the target data set satisfies a preset condition;
in response to determining that the preset condition is not satisfied, taking the first subset as a target data set to re-execute the labeling operation;
and in response to determining that the preset condition is satisfied, setting, for each data point in the first subset, a mark associated with the mark previously designated for at least one data point in the target data set.

2. The method as claimed in claim 1, further comprising:
dividing an initial data set into a plurality of second subsets;
for each of the plurality of second subsets, receiving a user input used for designating a mark for at least one data point in the second subset;
and selecting one of the plurality of second subsets as the target data set.

3. The method as claimed in claim 1 or 2, wherein, in response to determining that the preset condition is satisfied, setting, for each data point in the first subset, a mark associated with the mark previously designated for at least one data point in the target data set comprises:
setting a mark previously designated for at least one data point in the target data set as the mark for each data point in the first subset.

4. The method as claimed in claim 1 or 2, wherein determining whether the similarity between the mark and a mark previously designated for at least one data point in the target data set satisfies a preset condition comprises:
determining the semantic similarity between the mark and the mark previously designated for at least one data point in the target data set; and
determining whether the semantic similarity exceeds a preset threshold.

5. An apparatus for labeling a data point, comprising:
a module for executing a labeling operation on a target data set, wherein the target data set comprises a plurality of data points, each data point representing a service instance, and the module for executing a labeling operation on a target data set comprises:
a module for dividing the target data set into a plurality of first subsets;
for each of the first subsets:
a module for receiving a user input used for designating a mark for at least one data point in the first subset, wherein the mark is used for illustrating the situation of the service instance represented by the data point;
a module for determining whether the similarity between the mark and a mark previously designated for at least one data point in the target data set satisfies a preset condition;
a module for, in response to determining that the preset condition is not satisfied, taking the first subset as a target data set to re-execute the labeling operation;
and a module for, in response to determining that the preset condition is satisfied, setting, for each data point in the first subset, a mark associated with the mark previously designated for at least one data point in the target data set.

6. The apparatus as claimed in claim 5, further comprising:
a module for dividing an initial data set into a plurality of second subsets;
a module for, for each of the plurality of second subsets, receiving a user input used for designating a mark for at least one data point in the second subset;
and a module for selecting one of the plurality of second subsets as the target data set.

7. The apparatus as claimed in claim 5 or 6, wherein a module for, in response to determining that the preset condition is satisfied, setting, for each data point in the first subset, a mark associated with the mark previously designated for at least one data point in the target data set comprises:
a module for setting a mark previously designated for at least one data point in the target data set as the mark for each data point in the first subset.

8. The apparatus as claimed in claim 5 or 6, wherein a module for determining whether the similarity between the mark and a mark previously designated for at least one data point in the target data set satisfies a preset condition comprises:
a module for determining the semantic similarity between the mark and the mark previously designated for at least one data point in the target data set; and
a module for determining whether the semantic similarity exceeds a preset threshold.

9. A computing device comprising:
a memory for storing an instruction; and
at least one processor coupled to the memory, wherein the instruction, when executed by the at least one processor, causes the at least one processor to execute a labeling operation on a target data set, wherein the target data set comprises a plurality of data points, each data point representing a service instance, and the labeling operation comprises:
dividing the target data set into a plurality of first subsets;
for each of the first subsets:
receiving a user input used for designating a mark for at least one data point in the first subset, wherein the mark is used for illustrating the situation of the service instance represented by the data point;
determining whether the similarity between the mark and a mark previously designated for at least one data point in the target data set satisfies a preset condition;
in response to determining that the preset condition is not satisfied, taking the first subset as a target data set to re-execute the labeling operation;
and in response to determining that the preset condition is satisfied, setting, for each data point in the first subset, a mark associated with the mark previously designated for at least one data point in the target data set.

10. The computing device as claimed in claim 9, wherein the instruction, when executed by the at least one processor, further causes the at least one processor to:
divide an initial data set into a plurality of second subsets;
for each of the plurality of second subsets, receive a user input used for designating a mark for at least one data point in the second subset;
and select one of the plurality of second subsets as the target data set.

11. The computing device as claimed in claim 9 or 10, wherein when, in response to determining that the preset condition is satisfied, setting, for each data point in the first subset, a mark associated with the mark previously designated for at least one data point in the target data set, the at least one processor is configured to:
set a mark previously designated for at least one data point in the target data set as the mark for each data point in the first subset.

12. The computing device as claimed in claim 9 or 10, wherein when determining whether the similarity between the mark and a mark previously designated for at least one data point in the target data set satisfies a preset condition, the at least one processor is configured to:
determine the semantic similarity between the mark and the mark previously designated for at least one data point in the target data set; and
determine whether the semantic similarity exceeds a preset threshold.

13. A computer-readable storage medium, on which an instruction is stored which, when executed by at least one processor, causes the at least one processor to execute a labeling operation on a target data set, wherein the target data set comprises a plurality of data points, each data point representing a service instance, and the labeling operation comprises:
dividing the target data set into a plurality of first subsets;
for each of the first subsets:
receiving a user input used for designating a mark for at least one data point in the first subset, wherein the mark is used for illustrating the situation of the service instance represented by the data point;
determining whether the similarity between the mark and a mark previously designated for at least one data point in the target data set satisfies a preset condition;
in response to determining that the preset condition is not satisfied, taking the first subset as a target data set to re-execute the labeling operation;
and in response to determining that the preset condition is satisfied, setting, for each data point in the first subset, a mark associated with the mark previously designated for at least one data point in the target data set.

14. The computer-readable storage medium as claimed in claim 13, wherein the instruction, when executed by at least one processor, further causes the at least one processor to:
divide an initial data set into a plurality of second subsets;
for each of the plurality of second subsets, receive a user input used for designating a mark for at least one data point in the second subset;
and select one of the plurality of second subsets as the target data set.

15. The computer-readable storage medium as claimed in claim 13 or 14, wherein when, in response to determining that the preset condition is satisfied, setting, for each data point in the first subset, a mark associated with the mark previously designated for at least one data point in the target data set, the at least one processor is configured to:
set a mark previously designated for at least one data point in the target data set as the mark for each data point in the first subset.

16. The computer-readable storage medium as claimed in claim 13 or 14, wherein, when determining whether the similarity between the mark and a mark previously designated for at least one data point in the target data set satisfies a preset condition, the at least one processor is configured to:
determine the semantic similarity between the mark and the mark previously designated for at least one data point in the target data set; and
determine whether the semantic similarity exceeds a preset threshold.
